# EUROPEAN PATENT APPLICATION

(11) **EP 1 381 138 A1**
(43) Date of publication of application: **14.01.2004**
(21) Application number: 02717178.4
(22) Date of filing: 16.04.2002
(51) Int. Cl.: H02J 7/34, H02J 9/06

(54) **ELECTRONIC APPARATUS HAVING CHARGING FUNCTION**

(30) Priority: 19.04.2001 JP 2001121661; 29.05.2001 JP 2001160906
(71) Applicant: Matsushita Electric Industrial Co., Ltd., Kadoma-shi, Osaka 571-0050 (JP)
(72) Inventor: ISOMICHI, Yasuhiro, Kakegawa-shi, Shizuoka 436-0222 (JP); OKU, Hiroyuki, Yokohama-shi, Kanagawa 223-0056 (JP)
(74) Representative: Grünecker, Kinkeldey, Stockmair & Schwanhäusser Anwaltssozietät
(86) International application number: PCT/JP2002/003777
(87) International publication number: WO 2002/087055

(57) **Abstract**

An object of the present invention is to provide an electronic appliance equippedwith a charging function, in which a rechargeable battery is not discharged even when the electronic appliance is operated during charge operation.

When an external power supply is connected to an external power supply input terminal 2 of the electronic appliance, a charge current flows through a diode 3, a switch means 4, and a current detecting means 5 into the rechargeable battery so as to charge the rechargeable battery. While a control means 8 monitors the charge current, when the rechargeable battery 1 is brought into a full charge state and the charge current becomes lower than, or equal to a predetermined value, the control means 8 turns OFF the switch means 4 . When the switch means 4 is turned OFF, since the external power supply is electrically separated from the rechargeable battery 1, discharging operation of the rechargeable battery is blocked. Subsequently, in the case that the external power supply is connected, since the above-described external power supply voltage is supplied via a regulator 6 to a load 7 and the control means 8, the rechargeable battery is not discharged also in this case, but a full charge state is maintained.

## Description

### <TECHNICAL FIELD>

The present invention is related to an electronic appliance having a charging function and equipped with a rechargeable battery, such as a portable telephone, and an information terminal unit.

### <BACKGROUND ART>

In general, electronic appliances such as portable telephones and information terminal units, employing rechargeable batteries as power sources thereof, and are equipped with charging functions of these rechargeable batteries.

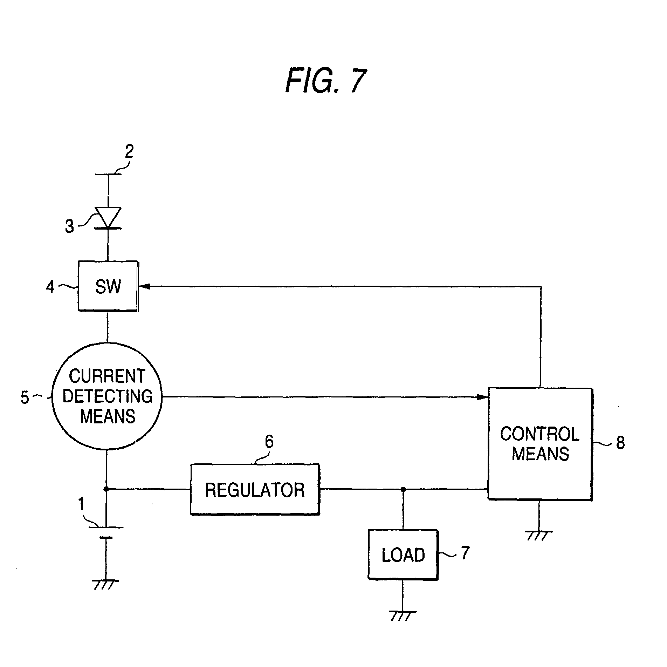

Fig. 7 is a block diagram for indicating a general-purpose portable telephone equipped with a conventional charging function. In Fig. 7, in the case that a rechargeable battery 1 is charged, an external power supply obtained from a power supply adapter (not shown), a charging unit (not shown), and an on-vehicle connector (not shown), which are known in this field, is connected to an input terminal 2 of the external power supply.

When the external power supply is connected to the input terminal 2, a charge current will flow from this external power supply via a diode 3, a switch means 4, and a current detecting means 5 into the rechargeable battery 1, so that the charge operation of the rechargeable battery 1 is commenced. In other words, the switch means 4 is controlled by a control means 8 to be brought into an ON state in the beginning. As a result, when the external power supply is connected to the input terminal 2, the charge current may flow from this external power supply via the switch means 4 and the current detecting means 5 into the rechargeable battery 1, so that the charge operation of the rechargeable battery 1 is commenced. While the rechargeable battery 1 is charged, the current detecting means 5 detects the charge current, and the control means 8 is operated by the detection output of this current detecting means 5 in such a manner that the switch means 4 is set under ON state.

When the charge operation of the rechargeable battery 1 is ended, this condition is detected by the current detecting means 4, and thus, the switchmeans 4 is turnedOFF. Subsequently, only a charge voltage of the charged rechargeable battery 1 is used via a regulator 6 as a power supply of a load 7 and also of the control circuit 8, which constitute an electronic appliance.

As explained above, even in the conventional electronics appliance equipped with the charging function, since the external power supply is connected to the input terminal 2, the rechargeable battery 1 can be charged, and also, the load 7, the control means 8 and the like, which constitute the electronic appliance, can be operated by employing the charged voltage thereof.

However, in the above-described conventional electronic appliance equipped with the charging function, such a circuit arrangement is made. That is, the power supply voltage is applied from a circuit point of the switch means 4 on the side of the rechargeable battery 1, namely from a junction point between the current detecting means 5 and the rechargeable battery 1 via the regulator 6 to the load 7 and the control means 8. As a result, even in such a case that the rechargeable battery 1 is charged and the switch means 4 is completely turned OFF, the rechargeable battery 1 is still connected via the regulator 6 to the load 7 and the control means 8, and thus, the rechargeable battery 1 commences the discharge operation via these circuit elements immediately after the charge operation.

As a result, this electronic appliance owns such a problem that even when the charge operation is ended, the discharge operation is commenced immediately after this charge operation, and after a predetermined time period has passed, the rechargeable battery 1 is brought into a relatively low voltage state, which again requires the charge operation.

Then, this situation still remains even when the external power supply is continuously connected to the input terminal 2. Accordingly, in this case, as previously explained, there is another problem even in such a case that the charge/discharge operations are repeatedly carried out for every definite period of time, and the rechargeable battery 1 is set on the charging unit and the like so as to be charged for long time. However, there are some possibilities that a large amount of charged energy of the rechargeable battery 1 has been discharged, depending upon such a certain timing when this electronic appliance is removed from the charging unit, namely the rechargeable battery 1 is not always under full-charging state.

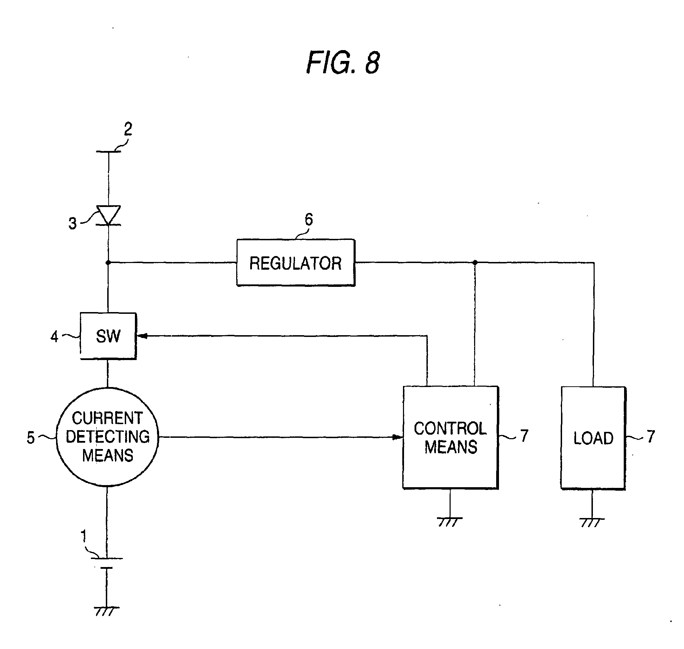

As a consequence, as previously shown in Fig. 8, another electronic appliance has been conceived in which the power supply voltage for the load 7 and the control means 8 is derived from the circuit point of the switch means 4 on the side of the external power supply 2.

This electronic appliance owns such a merit. That is, when the charge operation is completed and then the switch means 4 is turned OFF, the rechargeable battery 1 is already separated from the load 7 and the control means 8. Under such a condition that the external power supply 2 is connected to the electronic appliance, there is substantially no possibility that the rechargeable battery 1 is unnecessarily discharged. After the charge operation has been accomplished, when the electronic appliance is electrically disconnected from the external power supply 2 any time, the rechargeable battery 1 is brought into the substantially full charge state.

### <DISCLOSURE OF THE INVENTION>

However, in the above-described electronic appliance, since all of the loads 7 which constitute this electronic appliance are connected to the circuit point of the switch means 4 on the side of the external power supply 2, substantially high electric power should be supplied from the external power supply 2. For instance, in the case that this electronic appliance is a portable telephone, the load 7 contains a transmission circuit, a reception circuit, a storage circuit, a display circuit, a power amplifier, a speaker, a receiver, and many other circuits. As a result, when the above-described electronic appliance is brought into the operation condition under such a state that the external power supply 2 is connected to this portable telephone, substantially high electric power must be supplied from the external power supply 2. A charging device functioning as the external power supply 2 also must own a relatively large capacity. When considering a heating aspect, there is another problem that this charging device becomes bulky.

The present invention has been made to solve the above-described problems, and therefore, has an object to provide such an electronic appliance equipped with a superior charging function, in which after a charge operation is accomplished, a rechargeable battery is not automatically discharged, or a relatively small amount of battery energy is discharged, or a very small amount of battery energy is discharged. In addition, even when this electronic appliance is operated under such a condition that this electronic appliance is connected to an external power supply, a capacity of this external power supply is not so large.

To achieve the above-described obj ect, in accordance with the present invention, an electric appliance equipped with a charging function is arranged in such a manner that a load, a control means, and the like, which constitute the electronic appliance, are connected to a circuit point of a charging switch means on the side of an external power supply. As a result, when a charge operation is accomplished and the charging switch means is turned OFF, a rechargeable battery is not discharged automatically through the load, the control means, and the like, so that the rechargeable battery can be used under sufficiently full charge condition any time.

Also, according to the present invention, an electric appliance equipped with a charging function is arranged in such a manner that while a detection means is provided so as to detect a current flowing through the rechargeable battery during charge operation, when a completion of the charge operation of this rechargeable battery is detected based upon the output of the detection means, the charging switch means is turned OFF. As a result, when the charge operation is carried out, it can correctly sense the completion of the charge operation based upon the output of the detecting means for detecting the current flowing through the rechargeable battery, and can interrupt the charge operation.

Also, according to the present invention, an electronic appliance equipped with a charging operation is arranged in such a manner that an external current-carrying detection means and a means for forcibly turning ON the switchmeans are provided, and when this external current-carrying detection means detects that no current-carrying operation is performed by the external power supply, this means forcibly turns ON the switch means. As a result, when the external current-carrying detection means detects that no current-carrying operation is performed from the external power supply, the switch means is forcibly turned ON, and while the rechargeable battery is used as the power supply, the current-carrying operation to the load and the control means, which constitute the electronic appliance, can be correctly carried out.

Also, in accordance with the present invention, loads which constitute an electronic appliance are subdivided into a first load and a second load. The first load is connected to a circuit point of the charging switch means on the side of the external power supply, and the second load is connected to a circuit point of the charging switch means on the side of the rechargeable battery. As a result, if the charge operation is accomplished and the switch means is turned OFF, then the rechargeable battery is not substantially discharged via the first load and the control means. As a consequence, in the case that the charge operation is accomplished, and the rechargeable battery is still connected to the external power supply, the rechargeable battery can be used under sufficiently full charge condition any time.

It should be noted that while the rechargeable battery is discharged through the second load in accordance with the present invention, if this load is not brought into the operation condition thereof, then this discharge current is very small. Essentially, almost no discharge operation of the rechargeable battery can be carried out. Accordingly, discharging operation of the rechargeable battery can almost invariably be neglected. Even if the discharge current cannot be neglected, the discharge current from the rechargeable battery can be extremely reduced, as compared with that of the prior art, as the entire circuit. Even when the rechargeable battery is continuously connected to the external power supply under such a condition that the charging operation is completed, this rechargeable battery can be brought into the substantially full charge condition any time.

Then, in accordance with the present invention, even in such a case that while the electronic appliance is operated under such a condition that the external power supply is connected and a relatively large current must be supplied to the second load, this relatively large current may be supplied from the rechargeable battery 1. As a result, since a smaller current supply from the external power supply comparing to the prior art may be sufficient, there are such effects that a charging device functioning as the external power supply can be made compact, in a low capacity, and in a light weight.

Also, according to the present invention, an electronic appliance equipped with a charging function is arranged in such a manner that a detection means is provided which detects a current flowing through the rechargeable battery during a charge operation, and the charging switch means is turned OFF when a completion of the charge operation of the rechargeable battery is detected based upon an output of this detecting means . As a result, when the charge operation is carried out, it can correctly sense the completion of the charge operation based upon the output of the detecting means for detecting the current flowing through the rechargeable battery, and can interrupt the charge operation.

Furthermore, according to the present invention, an electronic appliance equipped with a charging function is arranged in such a manner that while an external current-carrying detection means is employed which detects a current-carrying operation of the external power supply, and when this external current-carrying detection means detects that no current-carrying operation is performed by the external power supply, it forcibly turns ON the switch means. As a result, when the external current-carrying detecting means detects that no current-carrying operation is performed from the external power supply, the switch means is forcibly turned ON. Accordingly, there is such an effect that when the electronic appliance is cut out from the external power supply, the switch means is necessarily turned ON, and while the rechargeable battery is used as the power supply, the current-carrying operation to the load and the control means, which constitute the electronic appliance, can be continuously and correctly carried out.

### <BRIEF DESCRIPTION OF THE DRAWINGS>

Fig. 1 is a functional block diagram for indicating an electronic appliance equipped with a charging function according to a first embodiment mode of the present invention.
Fig. 2 is an explanatory diagram for explaining operations of the electronic appliance equipped with the charging function according to the first embodiment mode of the present invention.
Fig. 3 is a functional block diagram for indicating an electronic appliance equipped with a charging function according to a second embodiment mode of the present invention.
Fig. 4 is an electric connection diagram for schematically showing the first embodiment mode of the electronic appliance equipped with the charging function according to the present invention.
Fig. 5 is a diagram for explaining operations of the respective units shown in Fig. 1.
Fig. 6 is an electric connection diagram for schematically representing the second embodiment mode of the electronic appliance equipped with the charging function according to the present invention.
Fig. 7 is a functional block diagram for indicating the conventional electronic appliance equipped with the charging function.
Fig. 8 is an electric connection diagram for schematically showing the electronic appliance equipped with the charging function, which has been previously invented by the Inventors of the present invention.

It should be noted that in this drawing, reference numeral 1 shows a rechargeable battery; reference numeral 2 indicates an input terminal of an external power supply; reference numerals 3, 9, 14 represent reverse-current blocking diode; reference numeral 4 indicates a switch means; reference numeral 5 shows a current detecting means; reference numeral 6 denotes a regulator; reference numeral 7 shows a load; reference numeral 8 shows a control means; reference numeral 10 indicates an external current detecting circuit; reference numeral 11 denotes an inverter; reference numeral 12 is a NOR circuit; and reference numeral 13 indicates a power amplifier.

### <BEST MODE FOR CARRYING OUT THE INVENTION>

Referring now to drawings, preferred embodiment modes of the present invention will be described.

### (FIRST EMBODIMENT MODE)

A first embodiment mode of the present invention is such an electronic appliance equipped with a charging function, in which a switch means is provided, and a power supply voltage is applied from a junction point between an external power supply and the switch means to a load, while this switch means is turned ON so as to connect the external power supply to a rechargeable battery when a charge operation is carried out; this switch means is turned OFF when the charge operation is accomplished; and this switch means is turned ON when the external power supply is disconnected from the electronic appliance.

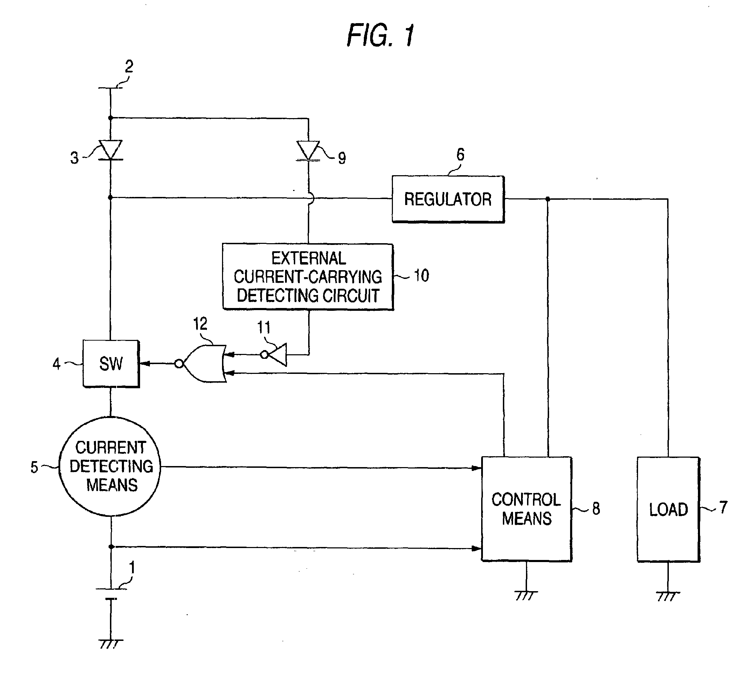

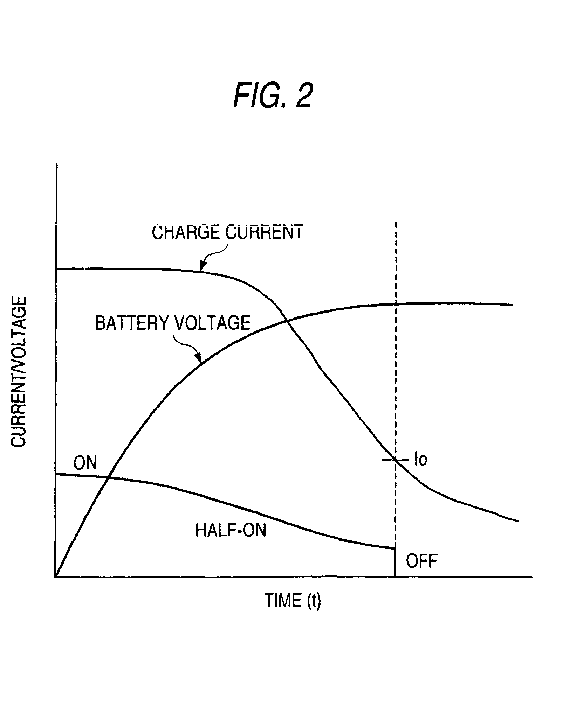

Fig. 1 is a functional block diagram for indicating the electronic appliance equipped with the charging function according to the first embodiment mode of the present invention. Fig. 2 is an explanatory diagram for explaining operations of this electronic appliance equipped with the charging function.

In Fig. 1, the input terminal 2 of the external power supply is connected via the reverse current blocking diode 3, the switch means 4, and the current detecting means 5 to the rechargeable battery 1. The regulator 6 is connected to a circuit point of the switch means 4 on the side of the external power supply, namely, a junction point between the diode 3 and the switch means 4. A voltage which is regulated by this regulator 6 is applied to the load 7 and the control means 8, which constitute the electronic appliance, as a power supply.

On the other hand, an output of the current detecting means 5 is supplied to the control means 8, and an output of the control means 8 is supplied to one input terminal of the NOR circuit 12. An external power supply current-carrying detection means 11 is connected via the diode 9 to the input terminal 2 of the external power supply. An output of this external power supply current-carrying detection means 11 is supplied via the inverter 11 to another input terminal of the NOR circuit 12.

The switch means 4 is constituted by an MOS-FET, a diode, and the like. The switch means 4 is arranged in such a manner that this switch means 4 is changed by receiving an output signal of the control means 8 supplied via the above-described NOR circuit 12 into an ON state, a half ON state, and an OFF state, respectively.

It should be noted that the current detecting means 5 is constructed of a resistor and a means for monitoring a voltage across both ends of this resistor. This resistor owns a relatively small resistance value, and is connected between the switch means 4 and the rechargeable battery 1. The control means 8 is arranged in such a manner that this control means 8 directly detects a voltage of the rechargeable battery 1, and outputs such a signal which causes the switch means 4 to be brought into three states, namely the ON state, the half ON state, and the OFF state in accordance with this voltage detection result and the current detection result of the current detecting means 5 (will be explained later).

In the above-described first embodiment mode, when the external power supply is connected to the external power supply input terminal 2, a charge current will flow from the external power supply input terminal 2 via the diode 3, the switch means 4, and the current detecting means 5 to the rechargeable battery 1. At this time, the switch means 4 is controlled under control of the control means 8 as follows:

That is, it is now assumed that while a lithium ion battery is employed as the rechargeable battery 1, this lithium ion battery is charged. In this case, the voltage of the external power supply applied to the input terminal 2 is normally higher than, or equal to 5.8 V. As the rechargeable battery 1, the battery voltage must be set that this battery voltage does not become higher than, or equal to 4.2 V. Also, in the case that the lithium ion battery is employed as the rechargeable battery 1, a charge current must be set that this charge current does not become larger than, or equal to 700 mA. The switch means 4 is controlled to be brought into the half ON state so as to satisfy such a condition.

Fig. 2 indicates this state. When the voltage of the rechargeable battery 1 is brought into a very low state, this state is sensed by the control means 8, and then, such a signal having a sufficiently large value by which the switch means 4 may be turned ON is outputted from the control means 8. As a result, the switch means 4 is brought into the completely ON state, and a relatively large charge current may flow into the rechargeable battery 1. When the charge operation is advanced and thus the voltage of the rechargeable battery 1 is gradually increased, the value of the signal outputted from the control means 8 is gradually lowered in response to this voltage increase, and the switch means 4 is brought into the half ON state under which the charge operation is carried out. When the charge operation is advanced, the voltage of the rechargeable battery 1 is increased and also the charge current flowing into the rechargeable battery 1 is gradually decreased in response to this voltage increase.

The charge current flowing through the rechargeable battery 1 is detected by the charge current detecting means 5, and the detected current value is applied to the control means 8. In this case, assuming now that a resistor having 0.15 ohms is used as the resistor for constituting the charge current detecting means 5, when a voltage across the both ends of this resistor is 150 mV, this implies that such a charge current having 1 A flows through this resistor. As a result, the charge current flowing through the rechargeable battery 1 can be correctly grasped by detecting the voltage appeared across both ends of this resistor.

As explained above, the control means 8 also monitors the charge current flowing through the rechargeable battery 1, and when the charge current is lowered to a certain constant value, for example, 50 mA, the control means 8 senses this charge current and controls the switch means 4 to be brought into the OFF state.

As described above, when the charge operation is accomplished and then the switch means 4 is brought into the OFF state, the charge current no longer flows, so that the external power supply is completely separated from the rechargeable battery 1. As a consequence, under this condition, the electron charges which have been charged into the rechargeable battery 1 are not substantially consumed by the load 7 and the control means 8 via the switch means 4 and the regulator 6. Conversely, if the external power supply is connected to the input terminal 2 under this condition, then the necessary power supply voltage is directly applied from the external power supply input terminal 2 to the load 7 and the control means 8.

As previously described, while the switch means 4 is constituted by the MOS-FET, the diode, andthe like, the complete OFF state of this switch means 4 cannot be obtained. Even in such a case, when the external power supply is connected to the input terminal 2, since the potential at the input side of the regulator 6 never becomes lower than the potential at the rechargeable battery 1, the electron charges which are charged into the rechargeable battery 1 are not consumed via the switch means 4 and the regulator 6 by the load 7 and the control means 8 even under this condition, but the necessary power supply voltage may be applied only from the external power supply input terminal 2. As a consequence, the rechargeable battery 1 can be set to the full charge state even in any timing until the electronic appliance is removed from the charging unit and the like and is electrically cut out from the external power supply.

Next, when the electronic appliance is removed from the charging unit and the like and is electrically cut out from the external power supply, this condition is sensed by the external current detecting circuit 10, and then, the output of this external current detecting circuit 10 is applied via the inverter 11 to another input terminal of the NOR circuit 12. As a result, the switch means 4 is forcibly brought into the ON state irrespective of a state of a control signal which is applied from the control means 8 into one input terminal of the NOR circuit 12, so that the electron charges which are charged in the rechargeable battery 1 are applied as the power supply voltage via the switch means 4 and the regulator 6 to the load 7 and the control means 8.

It should also be noted that in the above-explained embodiment mode, the lithium ion battery is employed as the rechargeable battery. Alternatively, a nickel hydrogen battery, and other rechargeable batteries may be similarly employed. Also, the current detecting means 5 is provided at the circuit point on the side of the rechargeable battery 1 of the switch means 4. Alternatively, this current detecting means 5 may be provided at the circuit point on the side of the external power supply of the switch means 4. In summary, the current detecting means 5 may be provided at a position where the charge current flows into the rechargeable battery 1.

### (SECOND EMBODIMENT MODE)

In the first embodiment mode, when the external power supply is not applied, the external current-carrying detection circuit 10 is separately provided in order to detect this fact. In a second embodiment mode, a means for detecting an application condition of an external power supply voltage is provided in the control means 8.

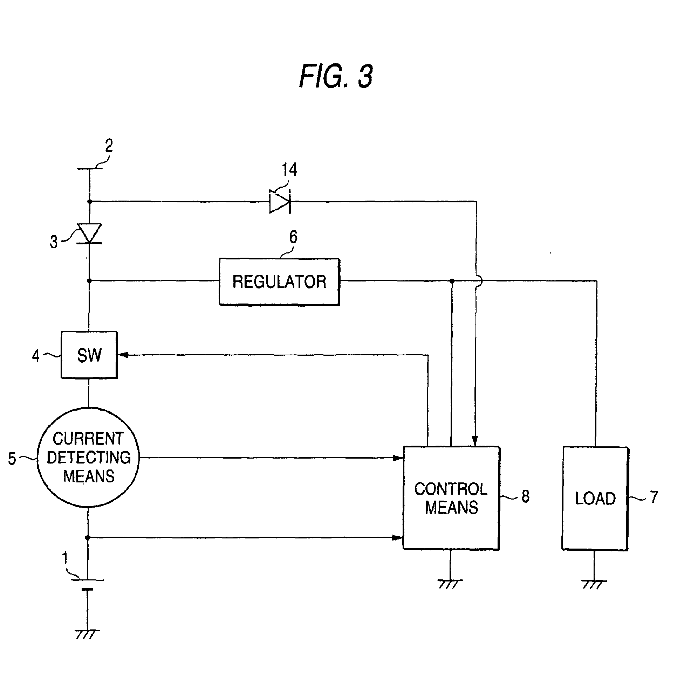

Fig. 3 is a functional block diagram of an electronic appliance equipped with a charging function according to a second embodiment mode of the present invention. It should be understood that the same reference numerals shown in Fig. 1 will be employed as those for indicating the same circuit elements shown in Fig. 3. A different point of this electronic appliance is such that a diode 13 is connected to the external power supply 2, an output side of this diode 13 is connected to the control means 8, and then, connection/disconnection of the external power supply 2 is directly detected by the control means 8. Even in such a case that the electronic appliance is arranged in this manner, it is easily possible to arrange that when the external power supply 2 is not connected, the switch means 4 can be forcibly turned ON under control of the above-described control means 8.

Also, in the second embodiment mode shown in Fig. 3, such an information as to whether or not the external power supply is connected is entered via the diode 13 to the control means 8. However, even when the electronic appliance is not provided with such a specific route having the diode 13, if the power supply voltage applied to the control means 8 is precisely monitored, then it is possible to arrange that when the external power supply 2 is not connected, the switchmeans 4 can be forcibly turned ON under control of the above-explained control means 8 similar to the above-described second embodiment mode.

That is to say, in the case that the external power supply is connected to this electronic appliance, since the power supply voltage applied to the control means 8 is applied from the input terminal 2 via the diode 3 and the regulator 6, the sufficiently high power supply voltage is applied. On the other hand, when the external power supply is not connected, since the control means 8 receives only the power supply voltage from the rechargeable battery 1, this power supply voltage is slightly lower than the power supply voltage obtained when the external power supply is connected. As a result, if a difference between these power supply voltage is detected by the control means 8, then the control means 8 can readily detect as to whether or not the external power supply is connected to the electronic appliance.

As a result, in the case that it is so detected that the external power supply is connected based upon this detection result, the control means 8 controls the switch means 4 to be turned from the ON state into the half ON state and the OFF state based upon the output signal from the current detecting means 5. In the case that it is so detected that the external power supply is not connected, the control means 8 automatically controls the switch means 4 to be brought into the ON state.

Also, in the above-described embodiment mode, while the current detecting means 5 is arranged by the resistor and the means for detecting the voltage across the both ends of this resistor, even when the external power supply is not connected, this current detecting means 5 is directly series-connected to the rechargeable battery 1. Alternatively, in the case that the external power supply is not connected, both ends of the current detecting means 5 may be automatically shortcircuited.

In this alternative arrangement, when the external power supply is not connected, the voltage of the rechargeable battery 1 is not dropped by the above-described resistor which constitutes the current detecting means, but may be effectively applied via the switch 4 and the regulator 6 to the load 7 and the control means 8.

### (THIRD EMBDOIMENT MODE)

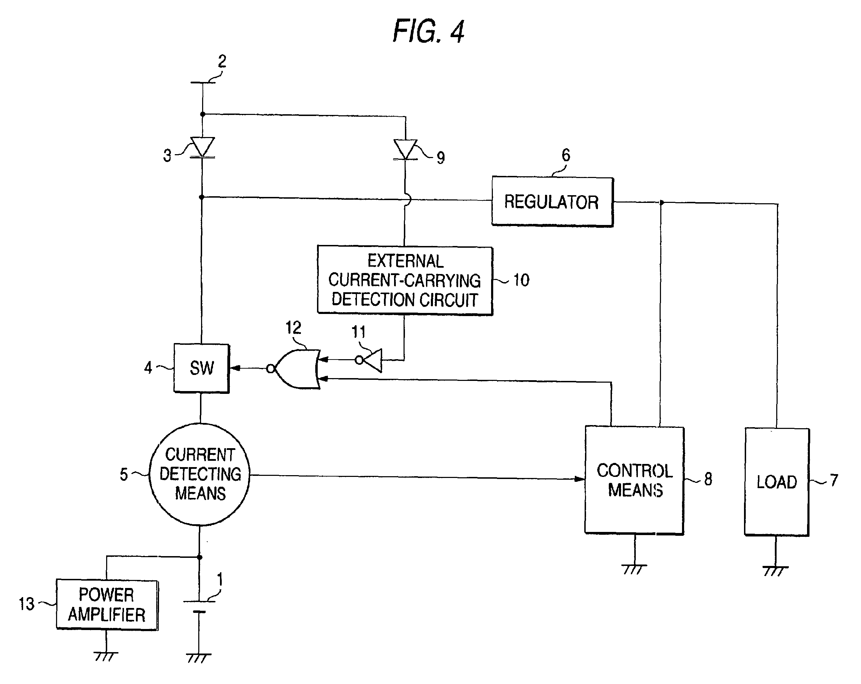

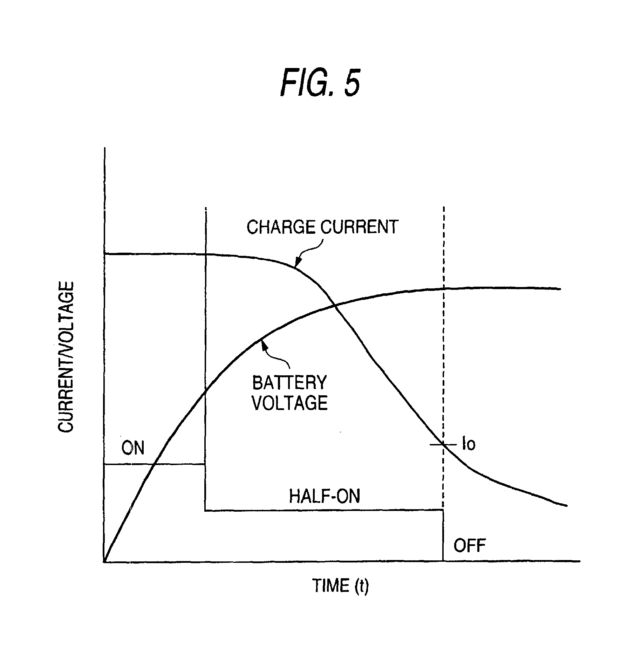

Fig. 4 is an electronic connection diagram for schematically showing a third embodiment mode of an electronic appliance equipped with a charging unit according to the present invention. Fig. 5 is an explanatory diagram for explaining operations of the respective units of the electronic appliance according to the third embodiment mode.

In Fig. 4, an input terminal 2 of an external power supply is connected via a reverse current blocking diode 3, a switch means 4, and a current detecting means 5 to a rechargeable battery 1. Then, a regulator 6 is connected to a circuit point of the switch means 4 on the external power supply side, namely a connection point between the diode 3 and the switch means 4. A voltage which is regulated by this regulator 6 is applied as a power supply to a first load 7 and a control means 8, which constitute the electronic appliance.

Then, a second load 13 is directly connected to the rechargeable battery 1, and is arranged to directly receive a supply of electric power from the rechargeable battery 1. In the case that the external power supply 2 is connected and the rechargeable battery 1 is being charged, a supply of electric power from the rechargeable battery 1 becomes insufficient. In this case, it is apparent that a lack of this electric power may be supplied from the external power supply 2.

On the other hand, as the second load 13, such a power amplifier is selected. That is, when this power amplifier is brought into operation condition, this power amplifier consumes relatively high power. In the case that a portable telephone is assumed as the electronic appliance, in a presently available general-purpose portable telephone, power consumption of an entire load is approximately 900 mA under operating condition of this portable telephone, whereas since approximately 600 mA is consumed only by the power amplifier, such a circuit containing at least the power amplifier maybe desirably employed as the second load in this case.

Next, an output of the current detectingmeans 5 is supplied to the control means 8, and an output of the control means 8 is supplied to one input terminal of the NOR circuit 12. An external power supply current-currying detection circuit 10 is connected via a diode 9 to the input terminal 2 of the external power supply. An output of this external power supply current-carrying detection circuit 10 is supplied via an inverter 11 to another input terminal of the NOR circuit 12.

The switch means 4 is constituted by an MOS-FET, a diode, and the like. The switch means 4 is arranged in such a manner that this switch means 4 is switched by receiving an output signal of the above-described NOR circuit 12 into an ON state, a half ON state, and an OFF state, respectively.

It should be noted that the current detecting means 5 is constructed of a resistor and a means for monitoring a voltage across both ends of this resistor. This resistor owns a relatively small resistance value, and is connected between the switch means 4 and the rechargeable battery 1.

In the above-described third embodiment mode, when the external power supply is connected to the external power supply input terminal 2, a charge current will flow from the external power supply input terminal 2 via the diode 3, the switch means 4, and the current detecting means 5 to the rechargeable battery 1. At this time, the switch means 4 is controlled under control of the control means 8 as follows:

That is, it is now assumed that while a lithium ion battery is employed as the rechargeable battery 1, this lithium ion battery is charged. In this case, the voltage of the external power supply applied to the input terminal 2 is normally higher than, or equal to 5.8 V. As the rechargeable battery 1, the battery voltage must be set that this battery voltage does not become higher than, or equal to 4.2 V. Also, a charge current must be set that this charge current does not become larger than, or equal to 700 mA. The switch means 4 is controlled to be brought into the half ON state so as to satisfy such a condition.

Fig. 5 indicates this condition. In the beginning, the switch means 4 is set under ON state, and thus, a large charge current may flow into the rechargeable battery 1. When the charge operation is advanced and the rechargeable battery 1 is charged up to a certain constant voltage, the switch means 4 is brought into the half ON state under which the charge operation is further carried out. While the charge operation is advanced, a voltage appeared across both ends of the rechargeable battery 1 is gradually increased, and the charge current flowing through the rechargeable battery 1 is gradually decreased.

The charge current flowing through the rechargeable battery 1 is detected by the charge current detecting means 5, and the detected current value is applied to the control means 8. In this case, assuming now that a resistor having 0.15 ohms is used as the resistor for constituting the charge current detecting means 5, when a voltage across both of this resistor is 150 mV, this implies that such a charge current having 1 A flows through this resistor.

As a result, the charge current flowing through the rechargeable battery 1 can be correctly grasped by detecting the voltage appeared across both ends of this resistor. As explained above, the control means 8 also monitors the charge current flowing through the rechargeable battery 1, and when the charge current is lowered to a certain constant value I₀, for example, 50 mA, the control means 8 senses this charge current and controls the switch means 4 to be brought into the OFF state.

As described above, when the charge operation is accomplished and then the switch means 4 is brought into the OFF state, the charge current no longer flows, so that the external power supply is completely separated from the rechargeable battery 1. As a consequence, under this condition, the electron charges which have been charged into the rechargeable battery 1 are not substantially consumed by the first load 7 and the control means 8 via the switch means 4 and the regulator 6. Conversely, if the external power supply is still connected to the input terminal 2 under this condition, then the necessary power supply voltage is directly applied from the external power supply input terminal 2 to the first load 7 and the control means 8.

On the other hand, in the above-described embodiment mode, while the second load 13 is directly connected to the rechargeable battery 1, after the charge operation is accomplished, a current required for the second load 13 immediately flows from the rechargeable battery 1, so that this rechargeable battery 1 is discharged. If the second load 13 is not under operation condition, then a very small current is selected as this discharge current. Accordingly, when the second load 13 is brought into non-operation condition, the rechargeable battery 1 is not essentially discharged.

As a result, a discharge current caused by the second load 13 under non-operation condition can be essentially neglected. Even in such a case that the discharge current cannot be neglected, the discharge current from the rechargeable battery 1 is very small, as compared with the prior art. Even when the electronic appliance is connected to the external power supply under such a condition that the charge operation is completed, the rechargeable battery 1 may be kept under substantially full-charge state any time.

Then, in such a case that the electronic appliance is operated, for instance, a telephone call is made, and/or a telephone call is received under such a condition that the external power supply is connected to this electronic appliance, a relatively large current must be supplied to the second load 13. However, in this case, since this relatively large current can be supplied from the rechargeable battery 1, a smaller current supply from the external power supply to the electronic appliance than the prior art may be sufficient, so that a charging device functioning as the external power supply can be made compact, in light weight, and also in a small capacity.

As previously described, while the switch means 4 is constituted by the MOS-FET, the diode, and the like, the complete OFF state of this switch means 4 may not be obtained. Even in such a case, when the external power supply is connected to the input terminal 2, since the potential at the input side of the regulator 6 never becomes lower than the potential at the rechargeable battery 1, the electron charges which are charged into the rechargeable battery 1 are not consumed via the switch means 4 and the regulator 6 by the first load 7 and the control means 8 even under this condition, but the necessary power supply voltage may be applied only from the external power supply input terminal 2. As a consequence, the rechargeable battery 1 can be set to the full charge state even in any timing until the electronic appliance is removed from the charging unit and the like and is electrically cut out from the external power supply.

When the electronic appliance is removed from the charging unit and the like and is electrically cut out from the external power supply, this condition is sensed by the external current-carrying detection circuit 10 and the output is applied via the inverter 12 to another input terminal of the NOR circuit 12. As a result, the switch means 4 is forcibly brought into the ON state irrespective of a state of a control signal which is applied from the control means 8 into one input terminal of the NOR circuit 12, so that the electron charges which are charged in the rechargeable battery 1 are applied as the power supply voltage via the switch means 4 and the regulator 6 to the load 7 and the control means 8.

It should also be noted that in the above-explained third embodiment mode, the lithium ion battery is employed as the rechargeable battery. Alternatively,a nickel hydrogen battery, and other rechargeable batteries may be similarly employed. Also, the current detecting means 5 is provided on the side of the rechargeable battery 1 of the switch means 4. Alternatively, this current detecting means 5 may be provided on the side of the external power supply. In summary, the current detecting means 5 may be provided at a position where the charge current flows into the rechargeable battery 1.

Also, in the above-described third embodiment mode, the circuit containing the power amplifier is selected as the second load. Alternatively, a transmission circuit, a reception circuit, and other circuits may be independently selected in addition to the power amplifier, as the second load. Further, these circuits may be selectively combined with each other as the second load.

Furthermore, in the above-explained third embodiment mode, when the external power supply voltage is not applied, the external current-carrying detection circuit 10 is separately provided in order to detect this fact. Alternatively, a means for detecting an application condition of an external power supply voltage may be provided in the control means 8.

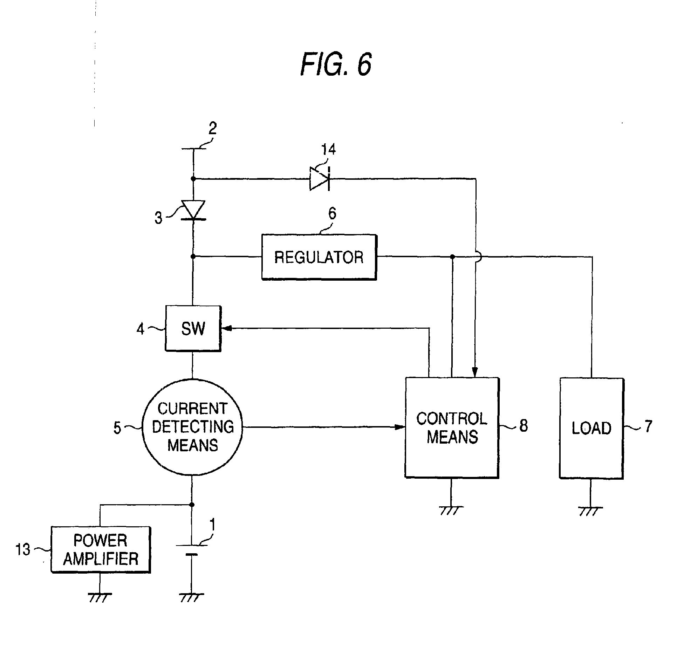

Namely, as shown in Fig. 6, a diode 14 is connected to the external power supply 2, an output side of this diode 14 is connected to the control means 8, and then, connection/disconnection of the external power supply 2 is detected by the control means 8. When the external power supply 2 is not connected, the switch means 4 may be turned ON under control of the control means 8 in response to this detection result.

Also, even when such a specific route that the control means 8 is directly connected to the external power supply is not employed, if a change in the power supply voltages applied to the control means 8 is precisely monitored, then the electronic appliance may be operated in a similar manner to that of the above-described electronic appliance.

In other words, even when there is no above-described specific route, in the case that the external power supply is connected to this electronic appliance, the power supply voltage applied to the control means 8 is applied from the input terminal 2 via the diode 3 and the regulator 6, and the sufficiently high power supply voltage is applied. On the other hand, when the external power supply is not connected, since the control means 8 receives only the power supply voltage from the rechargeable battery 1, this power supply voltage is slightly lower than the power supply voltage obtained when the external power supply is connected. As a result, if a difference between these power supply voltages is detected by the control means 8, then the control means 8 can readily detect as to whether or not the external power supply is connected to the electronic appliance.

As a result, in the case that it is so detected that the external power supply is connected based upon this detection result, as previously explained, the control means 8 controls the switch means 4 to be turned from the ON state into the half ON state and the OFF state based upon the output signal from the current detecting means 5. In the case that the external power supply is not connected, the control means 8 automatically controls the switch means 4 to be brought into the ON state.

Also, in the above-described third embodiment mode, while the current detecting means 5 is arranged by the resistor and the means for detecting the voltage across the both ends of this resistor, even when the external power supply is not connected, this current detecting means 5 is directly series-connected to the rechargeable battery 1 . Alternatively, in the case that the external power supply is not connected, both ends of the current detecting means 5 may be automatically shortcircuited.

In this alternative arrangement, when the external power supply is not connected, the voltage of the rechargeable battery 1 is not dropped by the above-described resistor which constitutes the current detecting means, but may be effectively applied via the switch 4 and the regulator 6 to the load 7 and the control means 8.

It should be understood that the present patent application has been made based upon Japanese PatentApplication No. 2001-121661 filed on April 19, 2001, and Japanese Patent Application No. 2001-160906 filed on May 29, 2001, and contents of these patent applications are incorporated herein as reference.

### <INDUSTRIAL APPLIABILITY>

As previously explained, in accordance with the present invention, the electronic appliance is arranged in such a manner that when the charge operation is carried out, the external power supply is connected via the charging switch means to the rechargeable battery, the load which constitutes the electronic appliance is connected to the circuit point of the charging switch means on the side of the external power supply. As a I result, when the charge operation is ended, if the switch means is turned OFF, then the rechargeable battery is not essentially and unnecessarily discharged via the load, the control means, and the like. Thus, the rechargeable battery can be used under sufficiently full charge condition.

Also, both the detecting means and the control means are provided, while the detecting means detects the current flowing through the rechargeable battery during the charge operation, and the control means controls the charging switch means in such a manner that the charging switch means is turned OFF when the completion of the charge operation of the rechargeable battery is detected based upon the output of this detecting means. As a result, when the charge operation is carried out, the control means can correctly sense the completion of the charge operation based upon the output of the detecting means for detecting the current flowing through the rechargeable battery, and can interrupt the charge operation.

Also, both the external current-carrying detection means and the means for forcibly turning ON the switch means are provided, while the external current-carrying detection means detects the current-carrying operation of the external power supply, and when this external current-carrying detection means detects that no current-carrying operation is performed by the external power supply, this means forcibly turns ON the switch means. As a result, when the external current-carrying detection means detects that no current-carrying operation is performed from the external power supply, the switch means is forcibly turned ON. Accordingly, when the electronic appliance is cut out from the external power supply, the switch means is necessarily turned ON, and while the rechargeable battery is used as the power supply, the current-carrying operation to the'load and the control means, which constitute the electronic appliance, can be continuously and correctly carried out.

Also, the rechargeable battery is connected via the charging switch means to the external power supply, the first load which constitutes the electronic appliance is connected to the circuit point of the charging switch means on the side of the external power supply, and the second load is connected to the circuit point of the switch means on the side of the rechargeable battery. As a result, if the charge operation is accomplished and the switch means is turned OFF, then the rechargeable battery is not substantially and unnecessarily discharged via the first load and the control means while the external power supply is connected. Even when the rechargeable battery is discharged via the second load, a very small discharge current will flow under such a condition that the electronic appliance is under non-operation condition. As a entire operation, the full charge condition can be everlastingly maintained.

Then, under such a condition that the external power supply is connected to the electronic appliance, in the case that this electronic appliance is brought into the operation condition, a large current may flow as the entire current. However, since a large current is supplied from the rechargeable battery to the second load, only a small current may be supplied from the external power supply, as compared with that of the prior art. Thus, there is no need to employ such an external power supply having a large capacity. As a result, there is such a merit that the charging device functioning as the external power supply can be made compact and in light weight for the sake of easy portability.

Also, both the detecting means and the control means are provided, while the detecting means detects the current flowing through the rechargeable battery during the charge operation, and the control means controls the charging switch means in such a manner that the charging switch means is turned OFF when the completion of the charge operation of the rechargeable battery is detected based upon the output of this detecting means. As a result, when the charge operation is carried out, the control means can correctly sense the completion of the charge operation based upon the output of the detecting means for detecting the current flowing through the rechargeable battery, and can interrupt the charge operation.

Also, both the external current-carrying detection means and the means for forcibly turning ON the switch means are provided, while the external current-carrying detection means detects the current-carrying operation of the external power supply, and when thisexternalcurrent-carrying detection means detects that no current-carrying operation is performed by the external power supply, this means forcibly turns ON the switch means. As a result, when the external current-carrying detecting means detects that no current-carrying operation is performed from the external power supply, the switch means is forcibly turned ON. Accordingly, there is such an effect that when the electronic appliance is cut out from the external power supply, the switch means is necessarily turned ON, and while the rechargeable battery is used as the power supply, the current-carrying operation to the load and the control means, which constitute the electronic appliance, can be continuously and correctly carried out.

## Claims

1. An electronic appliance equipped with a charging function wherein:
when a charge operation is carried out, an external power supply is connected via a charging switch means to a rechargeable battery; and a load which constitutes an electronic appliance is connected to a circuit point of said charging switch means on the side ot said external power supply.

2. An electronic appliance equipped with a charging function as claimed in claim 1, comprising:
detection means for detecting a current flowing through the rechargeable battery when the charge operation is carried out; and
means for turning OFF said charging switch means when a completion of the charge operation of the rechargeable battery is detected based upon an output of said detection means.

3. An electronic appliance equipped with a charging function as claimed in claim 2, comprising:
external current-carrying detection means for detecting a current-carrying operation of the external power supply; and
means for forcibly turning ON said switch means when said external current-carrying detection means detects that the current-carrying operation by said external power supply is not performed.

4. An electronic appliance equipped with a charge function wherein:
a rechargeable battery is arranged so as to be connected via a charging switch means to an external power supply;
a first load which constitutes the electronic appliance is connected to a circuit point of said switch means on the side of said external power supply; and
a second load which consumes high electric power when said second load such as a power amplifier is operated is connected to a circuit point of said charging switch means on the side of the rechargeable battery.

5. An electronic appliance equipped with a charging function as claimed in claim 4, comprising:
detection means for detecting a current flowing through the rechargeable battery when the charge operation is carried out; and
control means for controlling said charging switch means to be turned OFF when a completion of the charge operation of the rechargeable battery is detected based upon an output of said detection means.

6. An electronic appliance equipped with a charging function as claimed in claim 5, comprising:
external current-carrying detection means for detecting a current-carrying operation of the external power supply; and
means for forcibly turning ON said switch means when said external current-carrying detection means detects that the current-carrying operation by said external power supply is not performed.

7. An electronic appliance equipped with a charging function as claimed in claim 6 wherein:
means for forcibly turning ON said switch means is provided with said control means.
